(19) Europäisches Patentamt
European Patent Office
Office européen des brevets

(11) **EP 3 056 598 B1**

(12) **EUROPEAN PATENT SPECIFICATION**

(45) Date of publication and mention
of the grant of the patent:
**17.04.2019 Bulletin 2019/16**

(21) Application number: **14853053.8**

(22) Date of filing: **26.02.2014**

(51) Int Cl.:
*D04H 1/559* *(2012.01)*       *D04H 1/4374* *(2012.01)*
*D04H 1/728* *(2012.01)*       *D04H 1/4382* *(2012.01)*
*B01D 39/02* *(2006.01)*

(86) International application number:
**PCT/KR2014/001575**

(87) International publication number:
**WO 2015/053442 (16.04.2015 Gazette 2015/15)**

(54) **FILTER COMPRISING NANOFIBER AND METHOD FOR MANUFACTURING SAME**

FILTER MIT NANOFASERN UND VERFAHREN ZUR HERSTELLUNG DAVON

FILTRE COMPRENANT UNE NANOFIBRE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.10.2013  KR 20130119472**
          **07.10.2013  KR 20130119473**
          **07.10.2013  KR 20130119474**
          **07.10.2013  KR 20130119475**
          **07.10.2013  KR 20130119476**
          **07.10.2013  KR 20130119477**
          **07.10.2013  KR 20130119478**
          **07.10.2013  KR 20130119479**
          **07.10.2013  KR 20130119480**
          **07.10.2013  KR 20130119481**
          **07.10.2013  KR 20130119482**
          **07.10.2013  KR 20130119483**
          **07.10.2013  KR 20130119484**

(43) Date of publication of application:
**17.08.2016  Bulletin 2016/33**

(73) Proprietor: **Finetex Ene, Inc.**
**Seoul 137-819 (KR)**

(72) Inventor: **PARK, Jong-Chul**
**Seoul 140-774 (KR)**

(74) Representative: **v. Bezold & Partner Patentanwälte
- PartG mbB
Akademiestraße 7
80799 München (DE)**

(56) References cited:
**WO-A2-2006/112563     KR-A- 20070 047 872
KR-A- 20110 046 907     KR-A- 20120 002 491
KR-A- 20130 020 661     US-A1- 2008 314 011
US-A1- 2009 032 475     US-A1- 2010 206 803**

## Description

### Technical Field

The present invention relates to a filter comprising nanofiber and more particularly, to a filter comprising nanofiber produced by electrospinning polymer spinning solution on a substrate.

### Background Art

Generally, a filter is a filtering medium which filters out foreign matter in fluid, and comprises a liquid filter and an air filter. An air filter is used for prevention of defective high-tech products along with high-tech industry development. An air filter eliminates biologically harmful things such as dust in air, particles, bio particles such as virus and mold, bacteria, etc. An air filter is applied in various fields such as production of semiconductor, assembly of computing device, hospital, food processing plant, food and agriculture field, and also widely used in workplace with a lot of dust, and thermoelectric power plant. Gas turbine used in thermal power plant intakes purified air from outside, compresses it, injects compressed air with fuel to combustion burner, mixes them, combusts mixed air and fuel, obtains high temperature and high pressure combustion gas, injects the high temperature and high pressure combustion gas to vane of turbine, and attains rotatory power. Since the gas turbine comprises very precise components, periodic planned preventive maintenance is performed, and wherein the air filter is used for pretreatment to purify air in the atmosphere which inflows to a compressor. Here, when an air filter adopts air for combustion intake to gas turbine, stop from permeating foreign substances in atmosphere such as dust into a filter medium, and provides purified air. However, particles with larger particle size form Filter Cake on the surface of the filter medium. Also, fine particles gradually accumulate in the filter medium, and block gas hole of the filter medium. Eventually, when particles accumulate on the surface of filter medium, it increases pressure loss of a filter, and decline sustainability of a filter.

Meanwhile, conventional air filter provides static electricity to fiber-assembly comprising a filter medium, and measures efficiency according to the principle collecting by electrostatic force. However, the Europe air filter standard classification EN779 is revised recently to eliminate efficiency of filter by static electricity effect in 2012 and revealed that conventional filter actual efficiency decreases 20% or more.

In order to solve the problems stated above, various methods which apply to filter by producing nanosize fiber have been developed and used. A nanofilter realized with nanofiber to filter, in comparision with to conventional filter medium having large diameter, specific-surface area is very large, flexibility of surface functionality is good, gas hole size has nano level, and harmful fine particles are effectively eliminated. However, realization of filter using nanofiber has problems such as increasing production cost, difficulty in adjusting various conditions for production, difficulty in mass-production, and filter using nanofiber could not be produced and distributed in relatively low unit cost. Also, since conventional technology of spinning nanofiber is limited to small scale production line concentrating on laboratory, there is no case of introduction of spinning-section as unit concept.

### Disclosure

### Technical Problem

The present invention is contrived to solve the problems stated above, the present invention relates to a filter comprising nanofiber non-woven fabric laminating formed by electrospinning polymer spinning solution on a substrate. The present invention provides a filter that can have less pressure lose than conventional filter, increase filtering efficiency, and extend filter sustainability.

Moreover, the present invention is directed to providing a filter produced by introducing unit concept in electrospinning, which can mass-produce, and produces filter with uniformed quality.

### Technical Solution

According to the present invention, a filter having the characteristic features of claim 1 is provided. Said filter comprises a cellulose substrate and a first polyvinylidene fluoride nanofiber non-woven fabric layer with fiber diameter of 150 to 300nm and a second polyvinylidene fluoride nanofiber non-woven fabric layer with fiber diameter of 100 to 150nm laminating formed on the first polyvinylidene fluoride nanofiber non-woven by electrospinning.

According to an exemplary embodiment of the present invention, a hot-melt electrospinning layer is provided between a cellulose substrate and the polyvinylidene fluoride nanofiber non-woven fabric.

According to another exemplary embodiment of the present invention, polyvinylidene fluoride nanofiber non-woven fabric is produced by solution which mixed polyvinylidene fluoride and hot-melt.

According to yet another exemplary embodiment of the present invention, the filter comprising nanofiber is laminated and electrospinned polyvinylidene fluoride solution on polyvinylidene fluoride - hot-melt nanofiber non-woven fabric produced by solution mixed polyvinylidene fluoride and hot-melt. Here, hot-melt is preferably polyvinylidene fluoride group hot-melt.

According to another exemplary embodiment of the present invention, the cellulose substrate comprises cellulose and polyethylene terephthalate.

According to yet another exemplary embodiment of the present invention, composition rate of cellulose substrate is the cellulose 70 to 90 weight% and the polyethylene terephthalate 10 to 30 weight%.

According to another exemplary embodiment of the present invention, the cellulose substrate is coated with a flame resistant.

According to yet another exemplary embodiment of the present invention, the filter comprising nanofiber comprises a substrate, low melting point polyvinylidene fluoride nanofiber non-woven fabric laminated by electrospinning on the substrate, and high melting point polyvinylidene fluoride nanofiber non-woven fabric laminated by electrospinning on the low melting point polyvinylidene fluoride nanofiber non-woven fabric, the substrate, the low melting point polyvinylidene fluoride nanofiber non-woven fabric, and the high melting point polyvinylidene fluoride nanofiber non-woven fabric are thermosetted each other.

According to an exemplary embodiment of the method and electrospinning apparatus described herein for manufacturing the filter of the present invention, the electrospinning apparatus comprises 2 or more units, spinning solution main tank is independently connected and installed in nozzle of nozzle block located in each unit, and polymer spinning solution is spinned on a substrate located in a collector of each unit, method for manufacturing filter comprising nanofiber comprises a step of inserting polyvinylidene fluoride solution which dissolved polyvinylidene fluoride in solvent to spinning solution main tank of each unit, a step of laminating-forming polyvinylidene fluoride nanofiber non-woven fabric by consecutively electrospinning the polyvinylidene fluoride solution in nozzle of each of the unit on a cellulose substrate, and a step of thermosetting the cellulose substrate and the polyvinylidene fluoride nanofiber non-woven fabric.

According to yet another exemplary embodiment of the method described herein for manufacturing the filter of the present invention, the step of laminating-forming the polyvinylidene fluoride nanofiber non-woven fabric comprises a step of laminating-forming a first polyvinylidene fluoride nanofiber non-woven fabric with fiber diameter of 150 to 300nm in a first unit of the electrospinning apparatus and a step of laminating-forming a second polyvinylidene fluoride nanofiber non-woven fabric with fiber diameter of 100 to 150nm in a second unit of the electrospinning apparatus.

According to another exemplary embodiment of the method described herein for manufacturing the filter of the present invention, the polyvinylidene fluoride solution includes producing solution mixed polyvinylidene fluoride and hot-melt.

According to yet another exemplary embodiment of the method decribed herein for manufacturing the filter of the present invention, the method for manufacturing filter comprising nanofiber comprises a step of laminating-forming the polyvinylidene fluoride nanofiber non-woven fabric including a step of forming polyvinylidene fluoride - hot-melt nanofiber non-woven fabric by electrospinning solution mixed polyvinylidene fluoride and hot-melt on a cellulose substrate in a first unit of the electrospinning apparatus and a step of laminating-forming polyvinylidene fluoride nanofiber non-woven fabric by electrospinning polyvinylidene fluoride solution on the polyvinylidene fluoride - hot-melt nanofiber non-woven fabric in a second unit of the electrospinning apparatus. Here, the hot-melt is preferably polyvinylidene fluoride group.

According to another exemplary embodiment of the method and electrospinning apparatus described herein for manufacturing the filter of the present invention, the electrospinning apparatus comprises 2 or more units, spinning solution main tank is independently connected and installed in nozzle of nozzle block located in each unit, and polymer spinning solution is spinned on a substrate located in a collector of each unit, method for manufacturing filter comprising nanofiber comprises a step of inserting hot-melt solution which dissolved hot-melt in solvent to a spinning solution main tank of a first unit and inserting polyvinylidene fluoride solution which dissolved polyvinylidene fluoride in solvent to a spinning solution main tank of a second unit of the electrospinning apparatus, a step of laminating-forming hot-melt electrospinning layer by electrospinning hot-melt solution on a cellulose substrate in the first unit, a step of laminating-forming polyvinylidene fluoride nanofiber non-woven fabric by consecutively electrospinning polyvinylidene fluoride solution on the hot-melt electrospinning layer in the second unit, and a step of thermosetting the cellulose substrate, the hot-melt electrospinning layer, and the polyvinylidene fluoride nanofiber non-woven fabric. Here, the hot-melt is preferably polyvinylidene fluoride group hot-melt.

According to yet another exemplary embodiment of the method described herein for manufacturing the filter of the present invention, the electrospinning apparatus comprises 2 or more units, spinning solution main tank is independently connected and installed in nozzle of nozzle block located in each unit, and polymer spinning solution is spinned on a substrate located in a collector of each unit, method for manufacturing filter comprising nanofiber comprises a step of producing high melting point polyvinylidene fluoride solution by dissolving high melting point polyvinylidene fluoride in solvent and producing low melting point polyvinylidene fluoride solution by dissolving low melting point polyvinylidene fluoride in solvent, a step of laminating-forming low melting point polyvinylidene fluoride nanofiber non-woven fabric by electrospinning the low melting point polyvinylidene fluoride solution on a substrate in a first unit of the electrospinning apparatus, a step of laminating-forming high melting point polyvinylidene fluoride nanofiber non-woven fabric by electrospinning the high melting point polyvinylidene fluoride solution on the low melting point polyvinylidene fluoride nanofiber non-woven fabric in a second unit of the electrospinning apparatus, and a step of thermosetting the substrate, the low melting point polyvinylidene fluoride nanofiber non-woven fabric, and the high melting point polyvinylidene fluoride nanofiber non-woven fabric.

**Advantageous Effects**

The filter according to the present invention by laminating-forming nanofiber non-woven fabric on a filter substrate, compared to conventional filter, is capable of lessening pressure lose, enhancing filter efficiency, and extending filter sustainability.

Moreover, the exemplary electrospinning apparatus described herein for manufacturing a filter of the present invention comprises at least 2 or more units and it is possible to consecutively electrospinning, thereby having an effect of mass-producing filter using nanofiber.

**Brief Description of the Drawings**

FIG. 1 schematically shows a side view of an exemplary electrospinning apparatus described herein for manufacturing the filter of the present invention.

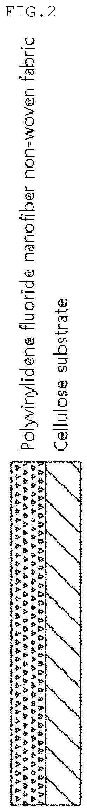

FIG. 2 schematically shows a view of a filter comprising polyvinylidene fluoride nanofiber non-woven fabric on a cellulose substrate according to an exemplary embodiment of the present invention.

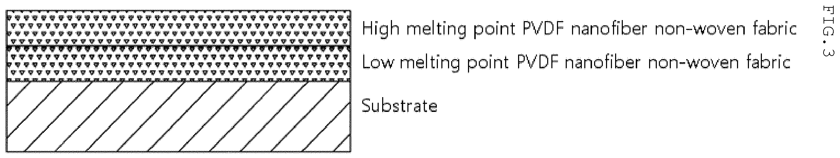

FIG. 3 schematically depicts a view of a filter comprising low melting point polyvinylidene fluoride nanofiber non-woven fabric and high melting point polyvinylidene fluoride nanofiber non-woven fabric on a substrate according to an exemplary embodiment of the present invention.

**Detailed Description of the Preferred Embodiments**

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

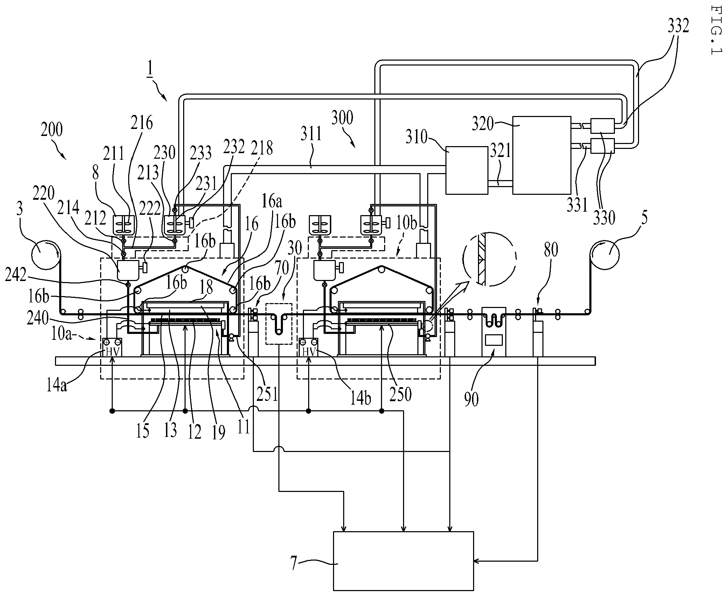

The following description explains an exemplary manufacturing method of filter comprising nanofiber according to the present invention using the the electrospinning apparatus shown in Fig. 1.

In the present invention, for polymer a polyvinylidene fluoride is used, and for an elongated sheet (15) a cellulose substrate is used. The cellulose substrate used in the present invention is excellent in dimensional stability in high temperature and has high heat-resisting property. In terms of cellulose fiber forming fine porous structure, it has high crystalline and high elasticity, and essentially it is fiber very excellent in dimensional stability. A cellulose substrate according to such features is used in consumer products such as highly efficient filter, functional paper, sheet for cooking, and intake sheet, etc. and technical fields such as semiconductor device, board for circuit board, substrate of low coefficient of thermal expansion material, and separator for power storage device.

The cellulose substrate used in the present invention preferably comprises composition rate of 100% cellulose, and a cellulose substrate comprising cellulose and polyethylene terephthalate in ratio of 70~90: 10~30 weight% can be used, and a cellulose substrate of flame resistant coating can be used.

First, polyvinylidene fluoride solution which dissolved polyvinylidene fluoride in organic solvent is supplied to a spinning solution main tank(8) connected to each unit(10a, 10b) of the electrospinning apparatus, and polyvinylidene fluoride solution provided to the spinning solution main tank(8) is consecutively and quantitatively provided to a plurality of nozzle(12) of a nozzle block(11) provided high voltage through a metering pump(not shown). Polyvinylidene fluoride solution provided from each of the nozzle (12) is electrospun and line-focused through a nozzle(12) on a cellulose substrate located on a collector(13) provided high voltage, and laminating forming polyvinylidene fluoride nanofiber non-woven fabric.

Meanwhile, in each unit(10a, 10b) of the electrospinning apparatus(1), a substrate laminated polyvinylidene fluoride nanofiber non-woven fabric is carried from the first unit(10a) to the second unit(10b) by a supply roller(3) operated by driving of a motor(not shown) and an auxiliary carry device(16) driving by rotation of the supply roller(3), the process is repeated, and on the substrate, nanofiber non-woven fabric is consecutively elctrospun and laminating formed.

According to this method, spinning solution provided to the spinning solution main tank(8) used polyvinylidene fluoride solution which dissolved polyvinylidene fluoride in organic solvent, or polyvinylidene fluoride and hot-melt can be mixed and used, or polyvinylidene fluoride solution and hot-melt solution can be provided differently according to each unit. Here, the hot-melt uses polyvinylidene fluoride group hot-melt, and it plays a role as adhesive on polyvinylidene fluoride nanofiber non-woven fabric and a cellulose substrate, and prevents separation of the polyvinylidene fluoride nanofiber non-woven fabric from a cellulose substrate.

Also, in the process of electrospinning and laminating forming the polyvinylidene fluoride solution on the cellulose substrate, by differing spinning conditions according to each unit(10a, 10b) of the electrospinning apparatus, in a first unit(10a), laminating forming polyvinylidene fluoride nanofiber non-woven fabric with large fiber diameter, and in a second unit(10b), consecutively laminating forming polyvinylidene fluoride nanofiber non-woven fabric with small fiber diameter.

In this case, a voltage generator(14a) installed in a first unit(10a) of the electrospinning apparatus(1) and providing voltage to a first unit(10a) is provided low spinning voltage, and forms polyvinylidene fluoride nanofiber non-woven fabric of fiber diameter of 150 to 300nm on a cellulose substrate, and a voltage generator(14b) installed in a second unit(10b) and providing voltage to a second unit(10b) is provided high spinning voltage, laminating forming polyvinylidene fluoride nanofiber non-woven fabric of fiber diameter of 100 to 150nm on the polyvinylidene fluoride nanofiber non-woven fabric of fiber diameter of 150 to 300nm. Here spinning voltage provided by each of the voltage generator(14a, 14b) is 1kV or more, and preferably 15kV or more, and voltage provided by a voltage generator(14a) of a first unit(10a) is lower than voltage provided by a voltage generator(14b) of a second unit(10b).

In an embodiment of this manufacturing method, voltage of a first unit(10a) of the electrospinning apparatus(1) is provided low, laminating polyvinylidene fluoride nanofiber non-woven fabric of fiber diameter of 150 to 300nm on a cellulose substrate, and voltage of a second unit(10b) is provided high, laminating forming polyvinylidene fluoride nanofiber non-woven fabric of fiber diameter of 100 to 150nm, and produces a filter. However, by differing voltage intensity, polyvinylidene fluoride nanofiber non-woven fabric of fiber diameter of 100 to 150nm spun and laminating formed in the first unit(10a), and polyvinylidene fluoride nanofiber non-woven fabric of fiber diameter of 150 to 300nm can be spun in the second unit(10b).

Here, in order to put difference in fiber diameter, a method of differing voltage intensity provided according to each unit(10a, 10b) is used, or by adjusting the distance between a nozzle(12) and a collector(13), polyvinylidene fluoride nanofiber non-woven fabric with different fiber diameter can be formed. In the case of spinning solution type and provided voltage intensity is the same, according to the principle of the nearer spinning distance is, the larger fiber diameter is, and the further spinning distance is, the smaller fiber diameter is, 2 different nanofiber non-woven fabric can be formed. Also, by adjusting density and viscosity of spinning solution, or by adjusting moving speed of an elongated sheet, fiber diameter can be different.

In addition, by comprising 3 or more units of the electrospinning apparatus(1) and by differing electrospinning conditions according to each unit, a filter laminating formed 3 layer or more polyvinylidene fluoride nanofiber non-woven fabric with different fiber diameter on a cellulose substrate can be produced.

According to the method as described above, consecutively laminating forming polyvinylidene fluoride nanofiber non-woven fabric on a cellulose substrate and thermosetting in a laminating device(90), and produces a filter according to the present invention.

Example 1

Polyvinylidene fluoride with weight average molecular weight of 50,000 is dissolved in N,N-Dimethylacetamide(DMAc) and produces spinning solution, and it is inserted in a spinning solution main tank of each unit of the electrospinning apparatus. In each unit, on a cellulose substrate, the spinning solution is consecutively electrospinning in conditions of the distance between an electrode and a collector is 40cm, applied voltage 20kV, spinning solution flow rate is 0.1mL/h, temperature 22°C, and humidity 20%, and laminating formed polyvinylidene fluoride nanofiber non-woven fabric with thickness of $3\mu$m. After electrospinning, going through a process of thermosetting, and produces a filter.

Example 2

Polyvinylidene fluoride with weight average molecular weight of 50,000 is dissolved in N,N-Dimethylacetamide(DMAc) and produces spinning solution, and it is inserted in a spinning solution main tank of each unit of the electrospinning apparatus. In a first unit of the electrospinning apparatus, applied voltage is provided 15kV, on a cellulose substrate, electrospinning the spinning solution, and laminating formed polyvinylidene fluoride nanofiber non-woven fabric with thickness of $2.5\mu$m and fiber diameter of 250nm. In a second unit, applied voltage is provided 20kV, electrospinning the spinning solution on the polyvinylidene fluoride nanofiber non-woven fabric, and laminating formed polyvinylidene fluoride nanofiber non-woven fabric with thickness of 2.5$\mu$m and fiber diameter of 130nm. In this case, in conditions of spinning solution flow rate is 0.1mL/h, temperature 22°C, and humidity 20%, after electrospinning and going through thermosetting, and a filter is produced.

Example 3

Polyvinylidene fluoride resin for hot-melt with number average molecular weight of 3,000 is dissolved in N,N-Dimethylformamide(DMF) of 8weight% and produces hot-melt solution, and it is inserted in a spinning solution main tank of a first of the electrospinning apparatus. Polyvinylidene fluoride with weight average molecular weight of 50,000 is dissolved in N,N-Dimethylacetamide(DMAc) and produces polyvinylidene fluoride spinning solution, and it is inserted in a spinning solution main tank of a second unit of the electrospinning apparatus. In the first unit of the electrospinning apparatus, on a cellulose substrate comprising composition rate of cellulose and PET is 80weight%: 20weight%, hot-melt solution is electrospun, and laminating formed hot-melt electrospinning layer of thickness of 1$\mu$m, and in a second unit, laminating formed polyvinylidene fluoride nanofiber non-woven fabric of thickness of 3$\mu$m on the hot-melt electrospinning layer. The electrospinning conditions and post process is the same as example 1.

Example 4

Polyvinylidene fluoride with weight average molecular weight of 50,000 and polyvinylidene fluoride resin for hot-melt with number average molecular weight of 3,000 is dissolved in N,N-Dimethylacetamide(DMAc) and produces spinning solution, and it is inserted to a spinning solution main tank of each unit of the electrospinning apparatus. In each unit, on a water-proof coating cellulose substrate, electrospinning the spinning solution in conditions of distance between an electrode and a collector is 40cm, applied voltage 20kV, spinning solution flow rate is 0.1mL/h, temperature 22°C, and humidity 20%, and laminating forming polyvinylidene fluoride nanofiber non-woven fabric of thickness of 3$\mu$m. After electrospinning, going through a process of thermosetting, and produces a filter.

Example 5

Polyvinylidene fluoride with weight average molecular weight of 50,000 and polyvinylidene fluoride resin for hot-melt with number average molecular weight of 3,000 is dissolved in N,N-Dimethylacetamide(DMAc) and produces spinning solution which mixed polyvinylidene fluoride and hot-melt, and it is inserted to a spinning solution main tank of a first unit of the electrospinning apparatus. Also, polyvinylidene fluoride solution which dissolved polyvinylidene fluoride in N,N-Dimethylacetamide is inserted to a spinning solution main tank of a second unit of the electrospinning apparatus. In the first unit, on a cellulose substrate, electrospinning spinning solution which mixed polyvinylidene fluoride and hot-melt, and laminating formed polyvinylidene fluoride - hot-melt nanofiber non-woven fabric with thickness of 2.5$\mu$m. In the second unit, consecutively electrospinning the polyvinylidene fluoride spinning solution on the polyvinylidene fluoride - hot-melt nanofiber non-woven fabric, and laminating formed polyvinylidene fluoride nanofiber non-woven fabric with thickness of 2.5$\mu$m. Electrospinning conditions and post process are the same as example 1.

Comparative Example 1

The cellulose substrate used in example 1 is used as filter medium.

Comparative Example 2

A filter is produced by laminating forming polyamide nanofiber non-woven fabric which electrospun polyamide on a cellulose substrate.

- Filtering efficiency measurement

In order to measure efficiency of the produced nanofiber filter, DOP test method is used. DOP test method measures dioctylphthalate(DOP) efficiency by an automated filter analyzer (AFT) of TSI 3160 in TSI Incorporated, and it can measure a filter media material permeability, filter efficiency, and pressure difference.
The automated analyzer makes DOP in a desired size particle, penetrates on a filter sheet, and automatically measures air speed, DOP filtering efficiency, air permeability in coefficient method, and it is very important device in high efficiency filter.
DOP % efficiency is defined as follows.

```
DOP % transmissivity = 1 − 100(lower DOP concentration/ upper
DOP concentration)
```

Filtering efficiency in example 1 to 5 and comparative example 1 is measured by the method as described above, and it is shown in Table 1.

[Table 1]

|  | Example 1 | Example 2 | Example 3 | Example 4 | Example 5 | Comparative Example 1 |
|---|---|---|---|---|---|---|
| 0.35$\mu$m DOP Filtering efficiency (%) | 90 | 93 | 92 | 92 | 93 | 70 |

As described above, a filter produced in example 1 to 5 of the present invention is excellent in filtering efficiency compared to comparative example 1.

- Pressure drop and filter sustainability measurement

The produced nanofiber non-woven fabric filter is measured pressure drop by ASHRAE 52.1 according to flow rate of 50/m$^3$, and measures filter life according to this. Table 2 shows data comparing example 1 to 5 and comparative example 1.

[Table 2]

|  | Example 1 | Example 2 | Example 3 | Example 4 | Example 5 | Comparative example 1 |
|---|---|---|---|---|---|---|
| Pressure drop (in.w.g) | 4.5 | 4.3 | 4.2 | 4.5 | 4.2 | 8 |
| Filter life (month) | 6.4 | 6.5 | 6.5 | 6.4 | 6.5 | 4 |

According to Table 2, a filter produced through an embodiment of the present invention, compared to comparative example, has low pressure drop which results in low pressure lose and has longer filter life which results in excellence in durability.

- Desorption of nanofiber non-woven fabric

In result of measuring whether desorption or not of nanofiber non-woven fabric and a filter substrate of the produced filter by ASTM D 2724 method, in a filter produced by example 3, 4 and 5 does not occur desorption of nanofiber non-woven fabric, and a filter produced by comparative example 2 occurs desorption of nanofiber non-woven fabric. Therefore, a filter produced through an embodiment of the present invention, compared to comparative example, does not occur desorption well between nanofiber non-woven fabric and a substrate.

Meanwhile, in an embodiment of the present invention, for substrate, a cellulose substrate is used, and for polymer used in polymer spinning solution, high melting point polyvinylidene fluoride and low melting point polyvinylidene fluoride can be used. Here, the low melting point polyvinylidene fluoride non-woven fabric plays a role as bonding layer between a substrate and high melting point polyvinylidene fluoride nanofiber non-woven fabric, and has effects of preventing desorption of nanofiber.

Example 6

In a first unit of the electrospinning apparatus, applied voltage is provided 15kV, electrospinning the low melting point polyvinylidene fluoride solution on a cellulose substrate, and laminating formed low melting point polyvinylidene fluoride nanofiber non-woven fabric of thickness of 2$\mu$m and fiber diameter of 170nm. In a second unit, applied voltage is provided 20kV, electrospinning the high melting point polyvinylidene fluoride solution on the low melting point polyvinylidene fluoride nanofiber non-woven fabric, and laminating formed high melting point polyvinylidene fluoride nanofiber non-woven fabric of thickness of 2$\mu$m and fiber diameter of 130nm, going through thermosetting, and produces a filter.

Example 7

Low melting point polyvinylidene fluoride nanofiber non-woven fabric of number average molecular weight of 5,000 is dissolved in N,N-Dimethlacetamide(DMAc) and produces low melting point polyvinylidene fluoride solution, and it is inserted to a spinning solution main tank of a first and a third unit of the electrospinning apparatus, and high melting point polyvinylidene fluoride of weight average molecular weight of 50,000 is dissolved in N,N-Dimethlacetamide(DMAc) and produces high melting point polyvinylidene fluoride solution and it is inserted to a spinning solution main tank of a second and a fourth unit of the electrospinning apparatus. In the first unit of the electrospinning apparatus, electrospinning the low melting point polyvinylidene fluoride solution on a cellulose substrate, and laminating formed a first low melting point polyvinylidene fluoride nanofiber non-woven fabric of thickness of 1$\mu$m. In the second unit, applied voltage is provided 15kV, electrospinning the high melting point polyvinylidene fluoride solution on the first low melting point polyvinylidene fluoride nanofiber non-woven fabric, and laminating formed a first high melting point polyvinylidene fluoride nanofiber non-woven fabric of thickness of 1$\mu$m and fiber diameter of 170nm. In the third unit of the electrospinning apparatus, electrospinning the low melting point polyvinylidene fluoride solution on the first high melting point polyvinylidene fluoride nanofiber non-woven fabric, and laminating formed a second low melting point polyvinylidene fluoride nanofiber non-woven fabric of thickness of 1$\mu$m. In the fourth unit, applied voltage is provided 20kV, electrospinning the high melting point polyvinylidene fluoride solution on the second low melting point polyvinylidene fluoride nanofiber non-woven fabric, laminating forming a second high melting point polyvinylidene fluoride nanofiber non-woven fabric of thickness of 1$\mu$m and fiber diameter of 130nm, going through thermosetting, and produces a filter.

Comparative Example 2

Polyethylene terephthalate substrate of basis weight of 100g/m$^2$ is used as filter medium.

Comparative Example 3

By laminating forming polyvinylidene fluoride nanofiber non-woven fabric which electrospun polyvinylidene fluoride on a polyethylene terephthalate substrate, and a filter is produced.

Filtering efficiency of the example 6 and 7 and comparative example 2 is measured by the filtering efficiency measuring method and shown in Table 3.

[Table 3]

|  | Example 6 | Example 7 | Comparative Example 2 |
|---|---|---|---|
| 0.35$\mu$m DOP Filtering efficiency(%) | 92 | 94 | 62 |

As described above, a filter comprising low melting point and high melting point polyvinylidene fluoride produced by example 6 to 7, compared to comparative example 2, is excellent in filtering efficiency.

Also, pressure drop and filter life of a filter produced by the example 6 to 7 and comparative example 2 are measured and shown in Table 4.

[Table 4]

|  | Example 6 | Example 7 | Comparative Example 2 |
|---|---|---|---|
| Pressure drop (in.w.g) | 4.2 | 4.5 | 5.2 |
| Filter life (month) | 5.2 | 5.1 | 3.8 |

According to Table 4, a filter produced by example 6 and 7, compared to comparative example 2, has low pressure drop which results less pressure loss, and longer filter sustainability which results in excellence in durability.

In result of measuring whether desorption or not of nanofiber non-woven and a filter substrate of a filter produced by the measuring method according to the example 6 and 7 and comparative example 3, in a filter produced by example 6 and 7 does not occur desorption of nanofiber non-woven fabric, but a filter produced by comparative example 3 occurs desorption of nanofiber non-woven fabric.

Therefore, a filter produced through example 6 and 7 of the present invention, compared to comparative example 3, does not occur desorption between nanofiber non-woven fabric and a substrate.

**Claims**

1. A filter comprising nanofiber, comprising:

    a cellulose substrate;
    a first polyvinylidene fluoride nanofiber non-woven fabric layer of fiber diameter of 150 to 300 nm; and
    a second polyvinylidene fluoride nanofiber non-woven fabric layer of fiber diameter of 100 to 150 nm,
    wherein the first polyvinylidene fluoride nanofiber non-woven fabric laminating formed on the cellulose substrate by electrospinning polyvinylidene fluoride solution,
    the second polyvinylidene fluoride nanofiber non-woven fabric laminating formed on the first polyvinylidene fluoride nanofiber non-woven fabric by electrospinning polyvinylidene fluoride solution, and
    the cellulose substrate and the first and the second polyvinylidene fluoride nanofiber non-woven fabric is thermosetted.

2. The filter comprising nanofiber of claim 1,
    a hot-melt electrospinning layer is formed between the cellulose substrate and the first polyvinylidene fluoride nanofiber non-woven fabric.

3. The filter comprising nanofiber of claim 1,
    wherein the first and the second polyvinylidene fluoride nanofiber non-woven fabric is produced by polyvinylidene fluoride and hot-melt mixed solution.

4. The filter comprising nanofiber of claim 2,
    wherein the hot-melt comprises polyvinylidene fluoride group hot-melt.

5. The filter comprising nanofiber of claim 1,
    wherein the cellulose substrate comprises cellulose and polyethylene terephthalate.

6. The filter comprising nanofiber of claim 5,
    wherein composition ratio of the cellulose is 70 to 90 mass%, and the polyethylene terephthalate composition ratio is 10 to 30 mass%.

7. The filter comprising nanofiber of claim 1,
    wherein the cellulose substrate is coated by flame resistant.

**Patentansprüche**

1. Ein Nanofasern umfassender Filter, welcher umfasst:

    ein Cellulose-Substrat;
    eine erste Vliesstoffschicht von Polyvinylidenfluorid-Nanofasern mit einem Faserdurchmesser von 150 bis 300 nm; und
    eine zweite Vliesstoffschicht von Polyvinylidenfluorid-Nanofasern mit einem Faserdurchmesser von 100 bis 150 nm,
    wobei der erste Vliesstoff von Polyvinylidenfluorid-Nanofasern als Laminat auf dem Cellulose-Substrat durch Elektrospinnen einer Polyvinylidenfluorid-Lösung gebildet worden ist,
    der zweite Vliesstoff von Polyvinylidenfluorid-Nanofasern als Laminat auf dem ersten Vliesstoff von Polyvinylidenfluorid-Nanofasern durch Elektrospinnen einer Polyvinylidenfluorid-Lösung gebildet worden ist, und
    das Cellulose-Substrat und die ersten und zweiten Vliesstoffe von Polyvinylidenfluorid-Nanofasern thermisch gehärtet sind.

2. Nanofasern umfassender Filter nach Anspruch 1,
    wobei eine Schmelzkleber-Elektrospinnschicht zwischen dem Cellulose-Substrat und dem ersten Vliesstoff von Polyvinylidenfluorid-Nanofasern ausgebildet ist.

3. Nanofasern umfassender Filter nach Anspruch 1, wobei der erste und zweite Vliesstoff von Polyvinylidenfluorid-Nanofasern mittels einer Mischlösung von Polyvinylidenfluorid und Schmelzkleber hergestellt sind.

**4.** Nanofasern umfassender Filter nach Anspruch 2, wobei der Schmelzkleber einen Schmelzkleber der Polyvinylidenfluorid-Gruppe umfasst.

**5.** Nanofasern umfassender Filter nach Anspruch 1, wobei das Cellulose-Substrat Cellulose und Polyethylenterephthalat umfasst.

**6.** Nanofasern umfassender Filter nach Anspruch 5, wobei der Anteil der Cellulose in der Zusammensetzung 70 bis 90 Masse-% beträgt und der Anteil des Polyethylenterephthalats in der Zusammensetzung 10 bis 30 Masse-% beträgt.

**7.** Nanofasern umfassender Filter nach Anspruch 1, wobei das Cellulose-Substrat mit einem Flammschutzmittel beschichtet ist.

**Revendications**

**1.** Filtre comprenant une nanofibre, comprenant :

un substrat de cellulose ;
une première couche de tissu non tissé en nanofibre de polyfluorure de vinylidène d'un diamètre de fibre de 150 à 300 nm ; et
une seconde couche de tissu non tissé en nanofibre de polyfluorure de vinylidène d'un diamètre de fibre de 100 à 150 nm,
dans lequel la première stratification de tissu non tissé en nanofibre de polyfluorure de vinylidène formée sur le substrat de cellulose par électrofilage d'une solution de polyfluorure de vinylidène,
la seconde stratification de tissu non tissé en nanofibre de polyfluorure de vinylidène formée sur le premier tissu non tissé en nanofibre de polyfluorure de vinylidène par électrofilage d'une solution de polyfluorure de vinylidène, et
le substrat de cellulose et le premier et le second tissu non tissé en nanofibre de polyfluorure de vinylidène sont thermodurcis.

**2.** Filtre comprenant une nanofibre selon la revendication 1,
une couche d'électrofilage de matière thermoplastique est formée entre le substrat de cellulose et le premier tissu non tissé en nanofibre de polyfluorure de vinylidène.

**3.** Filtre comprenant une nanofibre selon la revendication 1,
dans lequel le premier et le second tissu non tissé en nanofibre de polyfluorure de vinylidène sont produits par une solution mixte de polyfluorure de vinylidène et de matière thermoplastique.

**4.** Filtre comprenant une nanofibre selon la revendication 2,
dans lequel la matière thermoplastique comprend une matière thermoplastique du groupe des polyfluorures de vinylidène.

**5.** Filtre comprenant une nanofibre selon la revendication 1,
dans lequel le substrat de cellulose comprend de la cellulose et du polytéréphtalate d'éthylène.

**6.** Filtre comprenant une nanofibre selon la revendication 5,
dans lequel un rapport de composition de la cellulose est de 70 à 90% en masse, et le rapport de composition du polytéréphtalate d'éthylène est de 10 à 30% en masse.

**7.** Filtre comprenant une nanofibre selon la revendication 1,
dans lequel le substrat de cellulose est revêtu d'un ignifuge.

FIG.1

EP 3 056 598 B1

FIG.2

Polyvinylidene fluoride nanofiber non-woven fabric

Cellulose substrate

12

FIG.3

High melting point PVDF nanofiber non-woven fabric

Low melting point PVDF nanofiber non-woven fabric

Substrate